# EUROPÄISCHE PATENTANMELDUNG

(11) **EP 2 581 472 A1**
(43) Veröffentlichungstag der Anmeldung: **17.04.2013**
(21) Anmeldenummer: 11185023.6
(22) Anmeldetag: 13.10.2011
(51) Int. Cl.: C23C 28/04, C23C 28/00

(54) **Keramische Doppelschicht auf Zirkonoxidbasis**

(71) Anmelder: Siemens Aktiengesellschaft, 80333 München (DE)
(72) Erfinder: Stamm, Werner, 45481 Mülheim an der Ruhr (DE)

(57) **Zusammenfassung**

Durch die Verwendung einer zweilagigen keramischen Schicht auf Zirkonoxidbasis, die sowohl teilstabilisiert und vollständig stabilisiert ist, wird ein einfaches, aber sehr wirkungsvolles Wärmedämmschichtsystem erreicht.

## Beschreibung

Die Erfindung betrifft ein zweilagiges keramisches Schichtsystem auf Zirkonoxidbasis.

Die Verwendung von Zirkonoxid als einfache Schicht auf Turbinenschaufeln ist bekannt.
Ebenso ist bekannt mehrere keramische Schichten mit einer inneren Zirkonoxidschicht und einer äußeren Oxidschicht auf Pyrochlorbasis zu verwenden.

Es ist Aufgabe der Erfindung, bestehende keramische Beschichtungen weiter zu vereinfachen und zu verbessern.

Die Aufgabe wird gelöst durch ein keramisches Schichtsystem nach Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Schichtsystem,
- Figur 2: eine Liste von Superlegierungen,
- Figur 3: eine Turbinenschaufel,
- Figur 4: eine Brennkammer und
- Figur 5: eine Gasturbine.

Die Beschreibung und die Figuren stellen nur Ausführungsbeispiele der Erfindung dar.

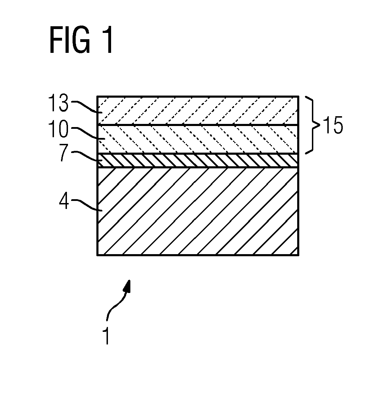

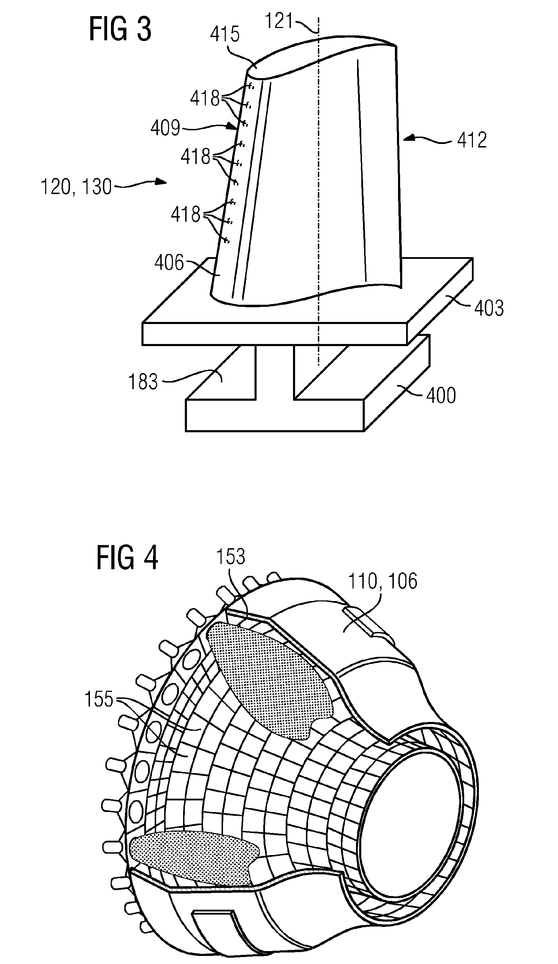

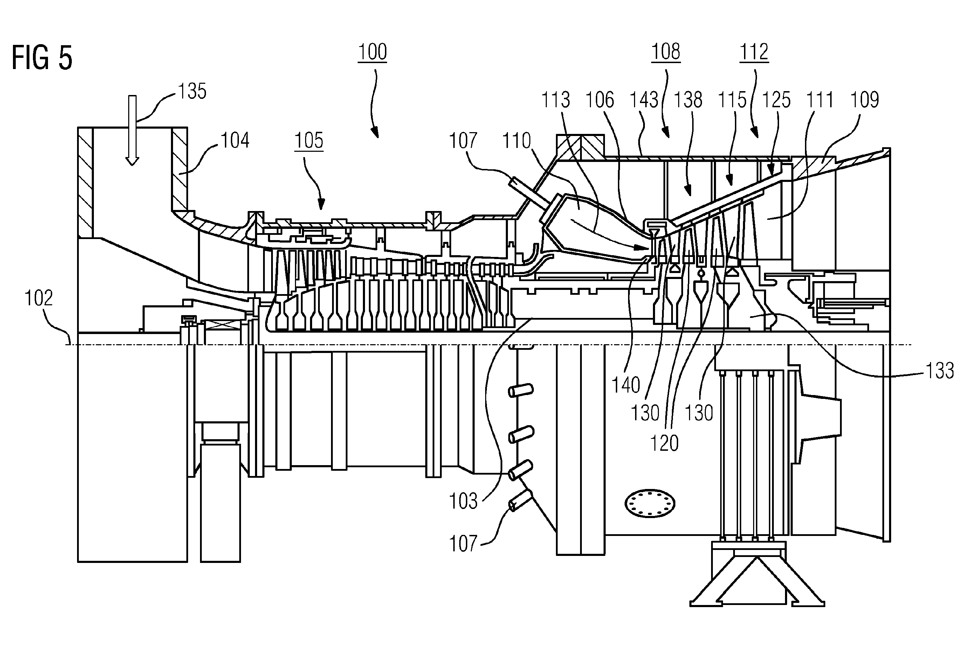

In Figur 1 ist ein Beispiel für ein erfindungsgemäßes Schichtsystem 1 gezeigt.
Ein solches Schichtsystem kann für Bauteile 120, 130, 155 (Fig. 3, 4), die bei hohen Temperaturen eingesetzt werden, verwendet werden. Dies sind insbesondere Brennkammernsteine 155, Turbinenschaufeln 120, 130 für Flugzeuge, Gasturbinen 100 (Fig. 5) und/oder Dampfturbinen.

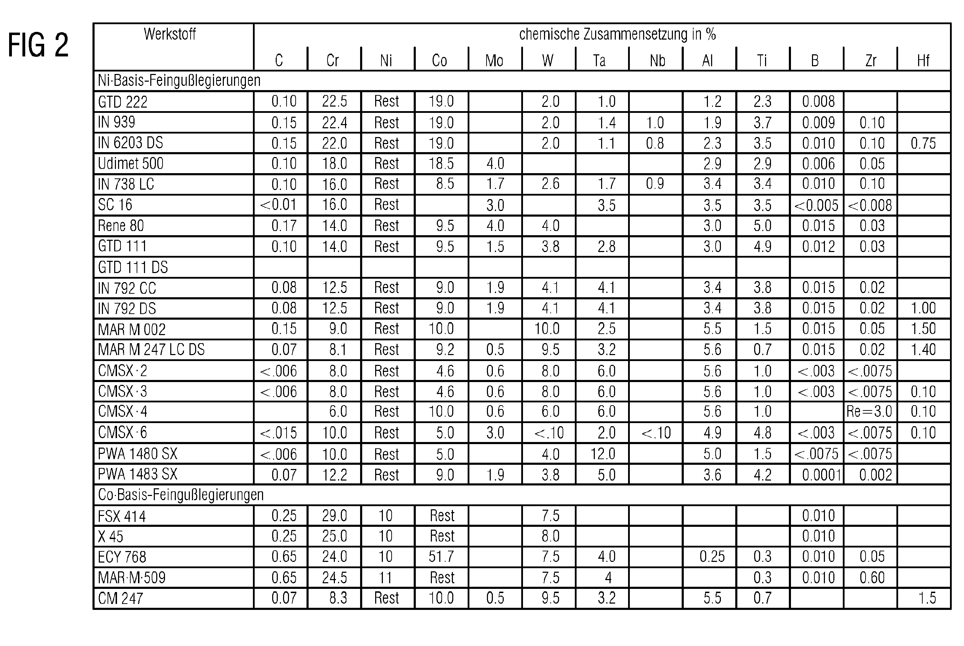

Das Schichtsystem 1 weist ein Substrat 4 auf.
Dies ist vorzugsweise metallisch und weist eine Nickel- oder kobaltbasierten Superlegierung auf. Insbesondere werden Superlegierungen gemäß Figur 2 verwendet.

Auf dem Substrat 4 ist optional eine metallische Haftvermittler- und Korrosionsschutzschicht 7 vorhanden. Dies können Aluminidschichten in verschiedenen Variationen sein oder vorzugsweise MCrAlX-Schichten (X optional = Y, Re, Si, Ta, Fe, ...).

Auf der MCrAlX-Schicht 7 oder auf dem Substrat 4 bildet sich im Betrieb (TGO) oder vorzugsweise vorab eine Aluminiumoxidschicht, die zum Oxidationsschutz beiträgt (nicht dargestellt).

Auf der metallischen Haftvermittlerschicht 7 oder dem Substrat 4 ist die vorzugsweise zweilagige keramische Schicht 15 jeweils auf Zirkonoxidbasis vorhanden, d.h. der Gewichtsanteil von Zirkonoxid beträgt mindestens 50%, insbesondere mindestens 60%.

Die keramischen Schichten 10, 13 weisen unterschiedliche Eigenschaften auf.
Die untere keramische Schicht 10 auf Zirkonoxidbasis ist vorzugsweise teilstabilisiert.
Die Teilstabilisierung vorzugsweise kann durch Yttriumoxid mit bekannten Anteilen, vorzugsweise zwischen 4wt% und 12wt% erfolgen.
Andere - alleine oder zusätzliche - bekannte Stabilisatoren entsprechend den bekannten Zugaben zur Teilstabilisierung, sind ebenfalls möglich, wie z.B. Magnesiumoxid und/oder andere Oxide.

Die äußere keramische Schicht 13 ist vorzugsweise eine vollstabilisierte Zirkonoxidschicht.
Die Vollstabilisierung wird vorzugsweise ebenfalls vorzugsweise durch Yttriumoxid in entsprechenden höheren Anteilen, vorzugsweise zwischen 20wt% und 50wt%, insbesondere zwischen 30% und 40% erreicht. Andere - alleine oder zusätzliche - bekannte Stabilisatoren entsprechend den bekannten Zugaben zur Teilstabilisierung, sind ebenfalls möglich, wie z.B. Magnesiumoxid oder andere Oxide.

Dieses keramische Doppel-Schichtsystem hat den Vorteil, dass durch das vollstabilisierte System der äußeren Schicht 13 sehr hohe Einsatztemperaturen erreichbar sind, da für den gesamten Temperaturbereich die C-Phase in diesem System stabil ist. Somit treten in der oberen Schicht 13 keine Phasen-Sprünge auf.

Durch die niedrigere Temperatur an der inneren keramischen Schicht 10 und die ähnlichen chemischen Systeme der Schichten 10, 13 ist eine gute Anbindung der keramischen Schichten 10, 13 untereinander vorhanden.
Ebenso durch die hohen Anteile des Stabilisators, insbesondere Yttrium, ist es möglich, dessen Verluste aufzufangen und das System im C-Phasenbereich stabil zu halten.

Beide Schichten 10, 13 weisen vorzugsweise eine Porosität von > 16%, insbesondere von 16% bis 24% auf.

Die äußere Schicht 13 ist mindestens 20%, insbesondere mindestens 30% dicker als die untere Schicht 10. Vorzugsweise beträgt das Schichtdickenverhältnis (10/13) 1/3 zu 2/3.

Die untere keramische Schicht 10 weist vorzugsweise eine Dicke bis zu 500 Mikrometern auf.
Die zweite keramische Schicht 13 weist vorzugsweise eine Dicke bis zu 1000 Mikrometern auf.

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.
Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 4 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Die Figur 5 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schichtsystem (1),
das zumindest aufweist:
ein Substrat (4),
eine zumindest zweilagige keramische Schicht (10, 13, 15) jeweils auf Zirkonoxidbasis mit unterschiedlichen Eigenschaften der Schichten (10, 13),
insbesondere eine nur zweilagige keramische Schicht (10, 13),
optional eine metallische Haftvermittlerschicht (7) zwischen Substrat (4) und keramischer Schicht (10, 13, 15).

2. Schichtsystem nach Anspruch 1,
bei dem eine äußere, insbesondere die äußerste keramische Schicht (13) vollstabilisiertes Zirkonoxid aufweist.

3. Schichtsystem nach Anspruch 1 oder 2,
bei dem eine untere, insbesondere die unterste keramische Schicht (10) teilstabilisiertes Zirkonoxid aufweist.

4. Schichtsystem nach einem oder mehreren der Ansprüche 1 bis 3,
das zumindest Yttriumoxid als Stabilisator von Zirkonoxid verwendet,
insbesondere nur Yttriumoxid verwendet wird.

5. Schichtsystem nach einem oder mehreren der Ansprüche 1 bis 4,
bei dem die metallische Haftvermittlerschicht (7) eine MCrAlX-Legierung aufweist,
X ist optional,
insbesondere ist zumindest eines der Elemente Yttrium (Y) oder Rhenium (Re).

6. Schichtsystem nach einem oder mehreren der Ansprüche 1 bis 5,
deren Porosität für die keramischen Schichten (10, 13, 15) mindestens 16%,
insbesondere zwischen 16% und 24% beträgt.

7. Schichtsystem nach einem oder mehreren der Ansprüche 1 bis 6,
bei dem die Porositäten der keramischen Schichten (10, 13) gleich sind.

8. Schichtsystem nach einem oder mehreren der Ansprüche 1 bis 7,
bei dem die obere keramische Schicht (13) mindestens 20%, insbesondere 30% dicker ist als die untere keramische Schicht (10).

9. Schichtsystem nach einem oder mehreren der Ansprüche 1 bis 8,
bei dem der Yttriumoxidanteil der unteren Zirkonoxid-Schicht (10) zwischen 4wt% und 12wt% liegt.

10. Schichtsystem nach einem oder mehreren der Ansprüche 1 bis 9,
bei dem der Yttriumoxidanteil der oberen Zirkonoxid-Schicht (13) zwischen 20wt% und 50wt%,
insbesondere zwischen 30wt% und 40wt% liegt.

11. Schichtsystem nach einem oder mehreren der Ansprüche 1 bis 10,
bei dem die Keramik nur Zirkonoxid und Stabilisator oder Stabilisatoren aufweist.
